# EUROPÄISCHE PATENTSCHRIFT

(11) **EP 3 032 127 B1**
(45) Veröffentlichungstag und Bekanntmachung des Hinweises auf die Patenterteilung: **10.04.2019**
(21) Anmeldenummer: 14197662.1
(22) Anmeldetag: 12.12.2014
(51) Int. Cl.: F16D 65/12

(54) **Clip-Fix für Bremsscheiben**
Clip-fix for brake disks
Clip-Fix pour disques de frein

(43) Veröffentlichungstag der Anmeldung: 15.06.2016
(73) Patentinhaber: Brembo SGL Carbon Ceramic Brakes GmbH, 86405 Meitingen (DE)
(72) Erfinder: Reulein, Harald, 86750 Megesheim (DE); Cretu, Ionel-Michael, 86356 Neusäß (DE); Rösler, Markus, 86157 Augsburg (DE)

(56) Entgegenhaltungen:
- EP-A1- 1 553 322
- EP-A1- 2 025 965
- DE-A1-102005 060 440
- DE-A1-102012 010 875
- DE-C1- 19 751 522

## Beschreibung

Die vorliegende Erfindung betrifft die Verbindung von zweiteiligen Bremsscheiben mit separatem Bremsscheibenring und Bremsscheibentopf. Insbesondere betrifft die vorliegende Erfindung ein Verbindungselement, welches für die Verbindung von Bremsscheibenring und Bremsscheibentopf geeignet ist und eine Bremsscheibe, die ein solches Verbindungselement aufweist.

Zweiteilige Bremsscheiben, im Gegensatz zu einteiligen Bremsscheiben, kommen in der Regel dann zum Einsatz, wenn das Material des Bremsscheibenrings einerseits und das Material des Bremsscheibentopfs andererseits aufgrund ihrer unterschiedlichen Materialanforderungen verschieden sind. Beispielsweise kann der Bremsscheibenring aus einer Keramik bestehen, während der Bremsscheibentopf aus Aluminium gefertigt ist. Der Begriff "zweiteilige" Bremsscheibe bezieht sich daher auf die beiden gesonderten Teile Bremsscheibenring und Bremsscheibentopf, die zur einer Bremsscheibe verbunden werden müssen, unabhängig davon ob die Bremsscheibe noch weitere Teile umfasst. Einteilige Bremsscheiben sind beispielsweise aus Stahl gefertigt und umfassen Ring und Topf in einem Stück.

Die überwiegend verwendete Verbindungsweise der beiden Teile einer zweiteiligen Bremsscheibe stellt die Verschraubung dar. Hierbei werden eine Vielzahl von Schrauben verwendet, die einzeln gesichert werden müssen. Dies stellt einen hohen Aufwand in der Montage dar. Überdies sind viele Einzelteile für die Verschraubung notwendig, was zudem das Risiko eines fehlerhaften Teils erhöht.

Eine andere Art der Verbindung zwischen Bremsscheibenring und Bremsscheibentopf wird in der DE 10 2009 010 969 A1. Hiernach werden Verbindungselemente als eine Art Feder in dafür vorgesehene Nuten eingesetzt, die in Bremsscheibenring und Bremsscheibentopf entsprechend eingebracht sind. Nachteilig an dieser Variante ist ebenfalls eine aufwendige Montage, da Bremsscheibenring und Bremsscheibentopf in einer exakten relativen Position zueinander gebracht werden müssen, sodass die korrespondierenden Nuten entsprechend zueinander ausgerichtet sind. Schließlich muss das Verbindungselement zusätzlich befestigt werden, was beispielweise mittels Verschraubung bewerkstelligt wird.

Die DE 102004008958A1 beschreibt ein ringförmiges Verbindungselement für eine Bremsscheibe zwischen Reibring und Topf, das gestanzt oder gebogen sein kann. Das Verbindungselement wird mittels Angießen irreversibel mit den Teilen der Bremsscheibe kombiniert. Zwar sind bei dieser Variante keine weiteren Einzelteile, wie beispielsweise bei der Verschraubung vorgesehen. Allerdings ist dieses Verfahren recht aufwendig, da der Bremsscheibenring und der Bremsscheibentopf angegossen werden müssen. Weiterhin führt die irreversible Verbindung dazu, dass fehlerhafte Teile der Bremsscheibe nicht mehr ausgetauscht werden können.

Die Aufgabe der vorliegenden Erfindung ist es daher, eine Verbindungsmöglichkeit zwischen Bremsscheibenring und Bremsscheibentopf zur Verfügung zu stellen, welche die genannten Nachteile nicht aufweist und insbesondere einfach in der Handhabung bei der Montage der Bremsscheibe ist.

Ein Verbindungselement, das in einer offenen Ringform ausgestaltet ist, geht z.B. aus EP-A-2 025 965 hervor. Das Verbindungselement ist geeignet für eine Verbindung eines Bremsscheibenrings mit einem Bremsscheibentopf zu einer Bremsscheibe. Das Verbindungselement beschreibt in seinem bestimmungsgemäßen Zustand in der Verbindung zwischen Bremsscheibenring und Bremsscheibentopf erfindungsgemäß über mehr als 180° der Ringform und weist zumindest ein Element zur Sicherung des Bremsscheibenrings in einer axialen Richtung auf.

Die vorliegende Erfindung betrifft daher in einem ersten Aspekt ein Verbindungselement geeignet für eine Verbindung eines Bremsscheibenrings mit einem Bremsscheibentopf zu einer Bremsscheibe, wobei das Verbindungselement in einer offenen Ringform ausgestaltet ist, wobei das Verbindungselement in seinem bestimmungsgemäßen Zustand in der Verbindung über mehr als 180° der Ringform beschreibt und wobei das Verbindungselement zumindest ein Element zur Sicherung des Bremsscheibenrings in einer axialen Richtung umfasst. Das Verbindungselement ist für eine mindestens formschlüssige Verbindung des Verbindungselementes mit einer inneren oder äußeren Mantelfläche des Bremsscheibentopfs ausgestaltet, wobei die formschlüssige Verbindung mindestens eine Spundung mit einem Spund und einer Nut umfasst.

In einem zweiten Aspekt betrifft die vorliegende Erfindung eine Bremsscheibe umfassend einen Bremsscheibenring, einen Bremsscheibentopf und ein Verbindungselement gemäß der vorliegenden Erfindung, wobei der Bremsscheibentopf einen rohrförmigen Abschnitt aufweist, welcher an seiner Mantelinnenfläche oder Mantelaußenfläche zumindest formschlüssig mit dem Verbindungselement verbunden ist.

Mit dem erfindungsgemäßen Verbindungselement kann eine entsprechende Bremsscheibe im Prinzip nur aus 3 Teilen bestehen, ohne zusätzliche Schrauben und dergleichen. Die Montage der Bremsscheibe, also der Zusammenbau durch Verbindung dieser 3 Teile ist besonders einfach. Hierbei werden in der Reihenfolge Bremsscheibentopf, Bremsscheibenring und das erfindungsgemäße Verbindungselement koaxial angeordnet und in axialer Richtung zusammengefügt. Der Bremsscheibenring wird dabei zwischen Bremsscheibentopf und dem Verbindungselement eingespannt. Durch die Unterbrechung der Ringform des Verbindungselements kann das Verbindungselement durch einfaches elastisches Aufweiten oder Zusammendrücken der offenen Ringform, je nach Auslegung sogar per Hand, bei der Montage in die Nähe seiner bestimmungsgemäßen Position geführt werden. Sobald der offene Ring wieder losgelassen wird, schnappt das Verbindungselement zurück, das heißt der Radius der Ringform verändert sich wieder entgegen der Richtung, in der der offene Ring aufgeweitet oder zusammengedrückt wurde und das Verbindungselement nimmt so seine bestimmungsgemäße Position im Verbund ein. Das Verbindungselement wird im Rahmen der vorliegenden Erfindung mitunter auch als offener Ring bezeichnet.

Das Verbindungselement bietet sowohl eine axiale, als auch eine radiale Sicherung einer zweiteiligen Bremsscheibe. Für die tangentiale Sicherung, die der Bremskraft widerstehen muss, können entsprechende, im Stand der Technik bekannte Vorkehrungen zwischen den zwei Hauptteilen der Bremsscheibe, dem Bremsscheibenring und dem Bremsscheibentopf, getroffen werden, wie zum Beispiel eine Verzahnung.

Im Folgenden werden bevorzugte Ausführungsformen der vorliegenden Erfindung detailliert beschrieben.
Figur 1 zeigt eine perspektivische Darstellung einer Ausführungsform des erfindungsgemäßen Verbindungselements.
Figur 2 zeigt eine perspektivische Darstellung einer Ausführungsform des erfindungsgemäßen Verbindungselements.
Figur 3 zeigt eine perspektivische Darstellung einer Ausführungsform der erfindungsgemäßen Bremsscheibe in ihrem Querschnitt.
Figur 4 zeigt eine perspektivische Darstellung einer Ausführungsform der erfindungsgemäßen Bremsscheibe in ihrem Querschnitt.

Das Verbindungselement (1) ist erfindungsgemäß in einer offenen Ringform ausgestaltet, d.h. die Form des Verbindungselements (1) beschreibt einen Ring, der eine Unterbrechung (10) aufweist. Die Größe der Unterbrechung (10) ist nicht besonders eingeschränkt. Das Verbindungselement (1) ist in der fertig montierten Bremsscheibe (100) derart angebracht, dass es Bremsscheibenring (3) und Bremsscheibentopf (2) miteinander verbindet. In diesem Verbund beschreibt das Verbindungselement (1) eine offene Ringform, wobei diese Ringform koaxial zum Bremsscheibenring (3) und zum Bremsscheibentopf (2) angeordnet ist, das heißt alle 3 Komponenten (1, 2, 3) besitzen dieselbe Rotationsachse (Z). Dieser Zustand beschreibt den im Rahmen der vorliegenden Erfindung bezeichneten bestimmungsgemäßen Zustand des Verbindungselements (1). Die Größe der Unterbrechung (10) in diesem Zustand ist daher kleiner als 180° der entsprechenden Ringform.

Das Verbindungselement (1) steht in seinem bestimmungsgemäßen Zustand bevorzugt unter Biegespannung. Daher kann das Verbindungselement (1) im spannungsfreien Zustand, also außerhalb des Verbunds auch als geschlossener Ring vorliegen, das heißt die Enden an der Unterbrechung (10) des Rings können sich berühren. Es ist jedoch auch möglich, dass das Verbindungselement (1) im spannungsfreien Zustand eine offene Ringform mit einem größeren Radius beschreibt, als die im bestimmungsgemäßen Zustand. Der Radius der offenen Ringform kann sogar bis ins Unendliche gehen, sodass das Verbindungselement (1) im spannungsfreien Zustand die Form einer geraden Stange beschreibt.

Das Element (11) zur Sicherung des Bremsscheibenrings (3) in einer axialen Richtung (B) ist bevorzugt dazu vorgesehen, in der Verbindung, beziehungsweise im Verbund, in direktem Kontakt mit dem Bremsscheibenring (3) zu stehen. Das Element (11) kann derart ausgestaltet sein, dass es einen im bestimmungsgemäßen Zustand durchgängig über die gesamte offene Ringform des Verbindungselements verlaufenden Vorsprung in radialer Richtung darstellt. Es ist auch möglich, dass dieser Vorsprung nicht durchgängig ist. Es können daher auch mehrere derartige Vorsprünge am Verbindungselement (1) vorhanden sein.

Bevorzugt beschreibt das Verbindungselement (1) im Querschnitt im Wesentlichen eine Winkelform, wobei ein Schenkel des Winkels das oben beschriebene Element (11) zur Sicherung des Bremsscheibenrings (3) in einer axialen Richtung (B) darstellt. Der andere Schenkel (12) weist im bestimmungsgemäßen Zustand in axiale Richtung der Bremsscheibe (100). Bei dem genannten Querschnitt liegt die Rotationsachse (Z) der Ringform, in der das Verbindungselement (1) im bestimmungsgemäßen Zustand angeordnet ist, in der Schnittebene.

Gemäß der Erfindung ist das Verbindungselement (1) für eine mindestens formschlüssige Verbindung des Verbindungselements (1) mit einer inneren (2MI) oder äußeren Mantelfläche (2MA) des Bremsscheibentopfs (2) ausgestaltet. Bevorzugt ist das Verbindungselement (1) über die oben genannte Biegespannung zusätzlich kraftschlüssig mit der entsprechenden inneren (2MI) oder äußeren Mantelfläche (2MA) des Bremsscheibentopfs (2) verbunden. Diese formschlüssige und gegebenenfalls kraftschlüssige Verbindung ist derart ausgestaltet, dass sie den Bremsscheibentopf (2) zumindest in axialer Richtung (A) sichert.

Gemäß der Erfindung umfasst die formschlüssige Verbindung mindestens eine Spundung mit einem Spund (S) und einer Nut (N). Die Form der Spundung ist dabei nicht besonders eingeschränkt. Sie kann sich analog zu dem oben genannten Vorsprung, beziehungsweise zu dem Element (11) zur Sicherung des Bremsscheibenrings (3), durchgängig über die gesamte offene Ringform des Verbindungselements (1) erstrecken, was fertigungstechnisch bevorzugt ist, aber auch Unterbrechungen aufweisen. Die Unterbrechungen können derart ausgestaltet sein, dass der gesamte Spund (S) eine Reihe von Zähnen darstellt. Dies bietet den zusätzlichen Vorteil einer Verdrehsicherung des Verbindungselements (1) gegenüber dem Bremsscheibentopf (2). Die Nut (N) ist bevorzugt so gestaltet, dass sie mit dem Spund (S) korrespondiert.

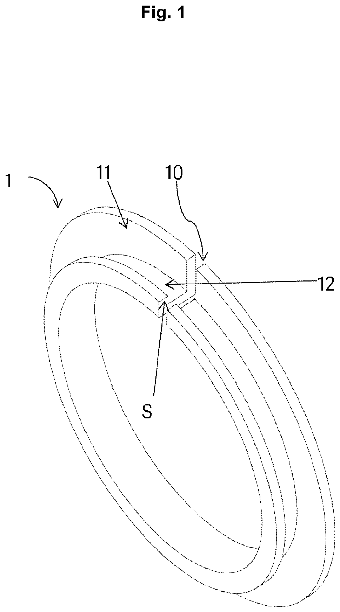

Die Form des Spunds (S) im Querschnitt ist nicht besonders eingeschränkt. Der Spund (S) kann rechteckig, wie in den Figuren 1-4 dargestellt, oder trapezförmig ausgestaltet sein. Grundsätzlich ist jedoch für die Form des Spundes (S) im Querschnitt jede Art der Erhebung möglich. Bevorzugt ist eine symmetrische oder asymmetrische Bogenform, die, weiter bevorzugt, mindestens einen geraden Abschnitt aufweist. Am meisten bevorzugt ist eine Querschnittsform, die in der zum Bremsscheibentopf (2) weisenden axialen Richtung (A) bogenförmig verläuft, also abgerundet ist, oder abgeschrägt ist. Dies erleichtert die Montage der Bremsscheibe (100), bei der das Verbindungselement (1) bevorzugt allein durch Kraftaufbringung in axialer Richtung (A) in oder über den rohrförmigen Abschnitt (2R) des Bremsscheibentopfs geführt und die formschlüssige Verbindung durch Einrasten des Spunds (S) in die Nut (N) hergestellt wird.

Die von dem Bremsscheibentopf (2) in axiale Richtung (B) wegweisende Flanke der Querschnittsform des Spunds (S) weist bevorzugt einen geraden Abschnitt in radialer Richtung auf, kann jedoch auch in die axiale Richtung (A) geneigt sein. Eine Hinterschneidung ist ebenfalls möglich. In diesem Fall ist der gerade Abschnitt in die axiale Richtung (B) geneigt. Eine Hinterschneidung würde zwar eine schwerer lösbare Verbindung bieten, jedoch ist diese fertigungstechnisch aufwendiger zu realisieren als eine gerade Flanke in exakt radialer oder leicht in die axiale Richtung (A) geneigte Flanke.

Der Spund (S) kann sich am Verbindungselement (1) oder an einer der Mantelflächen (2MI, 2MA) des Topfes (2) befinden. Bevorzugt weist jedoch das Verbindungselement (1) den Spund (S) der mindestens einen Spundung auf. Da das erfindungsgemäße Verbindungselement (1) bevorzugt dünner, also weniger stark ausgebildet ist als der Bremsscheibenring (3) und der Bremsscheibentopf (2), hat dies einen Vorteil in der Stabilität des Verbindungselements (1), denn eine Nut (N) würde an der betreffenden Stelle zu einem noch dünneren und damit weniger starken Bereich am Verbindungselement (1) führen.

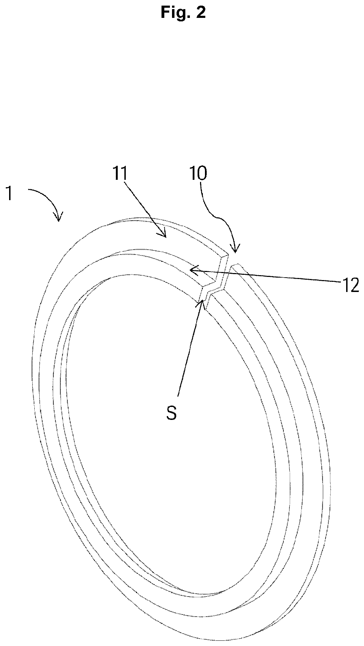

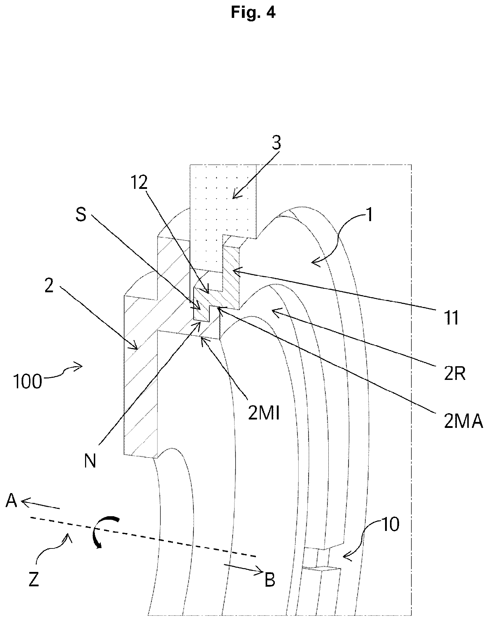

In einer der oben beschriebenen Ausführungsformen der vorliegenden Erfindung ist das Verbindungselement (1) im bestimmungsgemäßen Zustand mit einer äußeren Mantelfläche (2MA) des Bremsscheibentopfs (2) formschlüssig verbunden. Hierbei ragt der Spund (S), sofern er sich an dem Verbindungselement (1) befindet, von dem Schenkel (12) aus radial nach innen und greift in die korrespondierende Nut (N) an der äußeren Mantelfläche (2MA) des Bremsscheibentopfs (2). Diese Ausführungsform ist in Figur 4 dargestellt, während das entsprechende Verbindungselement (1) in Figur 2 dargestellt ist. Bei der Montage der Bremsscheibe (100) gemäß dieser Ausführungsform werden die Enden des offenen Rings derart auseinandergezogen, sodass der Durchmesser des offenen Rings ausreichend groß ist, um über den die ausführungsgemäße Nut (N) des Bremsscheibentopfs (2) aufweisenden Teil des Bremsscheibentopfs (2) geführt werden zu können. Die Größe der Unterbrechung des ringförmigen Verbindungselements (1) spielt in dieser Ausführungsform daher keine Rolle.

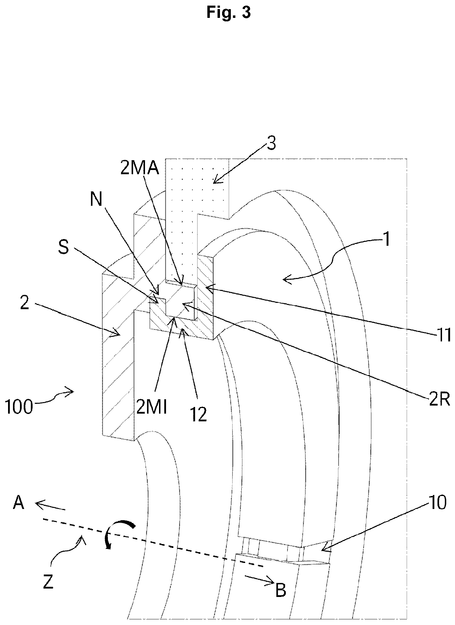

In einer anderen oben beschriebenen Ausführungsform der vorliegenden Erfindung ist das Verbindungselement (1) im bestimmungsgemäßen Zustand mit einer inneren Mantelfläche (2MI) des Bremsscheibentopfs (2) formschlüssig verbunden. Hierbei ragt der Spund (S), sofern er sich an dem Verbindungselement (1) befindet, von dem Schenkel (12) aus radial nach außen und greift in die korrespondierende Nut (N) an der inneren Mantelfläche (2MI) des Bremsscheibentopfs (2). Diese Ausführungsform ist in Figur 3 dargestellt, während das entsprechende Verbindungselement (1) in Figur 1 dargestellt ist. Bei der Montage der Bremsscheibe (100) gemäß dieser Ausführungsform werden die beiden Enden des offenen Rings soweit zusammengedrückt, sodass der Durchmesser des offenen Rings ausreichend klein ist, um das Verbindungselement (12) in die für die Verbindung vorgesehene Öffnung des Bremsscheibentopfs (2), die von der inneren Mantelfläche (2MI) definiert wird, einführen zu können. Die Unterbrechung 10 muss daher lediglich so groß sein, damit dies ermöglicht wird.

Die erfindungsgemäße Bremsscheibe (100) gemäß dem zweiten Aspekt der vorliegenden Erfindung umfasst einen Bremsscheibenring (3), einen Bremsscheibentopf (2) und das erfindungsgemäße Verbindungselement (1), wobei der Bremsscheibentopf (2) einen rohrförmigen Abschnitt (2R) aufweist, welcher an seiner Mantelinnenfläche (2MI) oder Mantelaußenfläche (2MA) zumindest formschlüssig mit dem Verbindungselement (1) verbunden ist.

Bevorzugt ist der Bremsscheibentopf (2) im Bereich der mit dem Verbindungselement (1) in Verbindung stehenden Mantelfläche (2MI, 2MA) abgeschrägt, sodass bei einer Montage der Bremsscheibe (100) das Verbindungselement (1) allein durch Kraftaufbringung in axialer Richtung (A) in oder über den rohrförmigen Abschnitt (2R) des Bremsscheibentopfs (2) gleiten kann und die zumindest formschlüssige Verbindung hergestellt werden kann.

## Patentansprüche

1. Verbindungselement (1) geeignet für eine Verbindung eines Bremsscheibenrings (3) mit einem Bremsscheibentopf (2) zu einer Bremsscheibe (100), wobei das Verbindungselement (1) in einer offenen Ringform ausgestaltet ist, wobei das Verbindungselement (1) in seinem bestimmungsgemäßen Zustand in der Verbindung über mehr als 180° der Ringform beschreibt, und wobei das Verbindungselement (1) zumindest ein Element (11) zur Sicherung des Bremsscheibenrings (3) in einer axialen Richtung (B) umfasst, **dadurch gekennzeichnet, dass** das Verbindungselement (1) für eine mindestens formschlüssige Verbindung des Verbindungselements (1) mit einer inneren (2MI) oder äußeren Mantelfläche (2MA) des Bremsscheibentopfs (2) ausgestaltet ist, wobei die formschlüssige Verbindung mindestens eine Spundung mit einem Spund (S) und einer Nut (N) umfasst.

2. Verbindungselement (1) nach Anspruch 1, **dadurch gekennzeichnet, dass** das Element (11) zur Sicherung des Bremsscheibenrings (3) in einer axialen Richtung dazu (B) vorgesehen ist, in der Verbindung in direktem Kontakt mit dem Bremsscheibenring (3) zu stehen.

3. Verbindungselement (1) nach Anspruch 1 oder 2, **dadurch gekennzeichnet, dass** das Verbindungselement (1) den Spund (S) der mindestens einen Spundung aufweist.

4. Verbindungselement (1) nach Anspruch 3, **dadurch gekennzeichnet, dass** sich der Spund (S) durchgängig über die gesamte offene Ringform des Verbindungselements (1) erstreckt.

5. Verbindungselement (1) nach einem der Ansprüche 1 bis 4, **dadurch gekennzeichnet, dass** das Material des Verbindungselements (1) Federstahl umfasst.

6. Bremsscheibe (100) umfassend einen Bremsscheibenring (3), einen Bremsscheibentopf (2) und ein Verbindungselement (1) gemäß einem der Ansprüche 1 bis 5, **dadurch gekennzeichnet, dass** der Bremsscheibentopf (2) einen rohrförmigen Abschnitt (2R) aufweist, welcher an seiner Mantelinnenfläche (2MI) oder Mantelaußenfläche (2MA) zumindest formschlüssig mit dem Verbindungselement (1) verbunden ist.

7. Bremsscheibe (100) nach Anspruch 6, **dadurch gekennzeichnet, dass** der Bremsscheibentopf (2) im Bereich der mit dem Verbindungselement (1) in Verbindung stehenden Mantelfläche (2MI, 2MA) abgeschrägt ist, so dass bei einer Montage der Bremsscheibe (100) das Verbindungselement (1) allein durch Kraftaufbringung in axialer Richtung (A) in oder über den rohrförmigen Abschnitt (2R) des Bremsscheibentopfs (2) gleiten und die zumindest formschlüssige Verbindung hergestellt werden kann.

## Claims

1. Connecting element (1) suitable for connecting a brake disc ring (3) to a brake disc pot (2) to form a brake disc (100), the connecting element (1) being designed in an open annular shape, the connecting element (1) in its intended state in the connection describing over more than 180° of the annular shape, and the connecting element (1) comprising at least one element (11) for securing the brake disc ring (3) in an axial direction (B), **characterised in that** the connecting element (1) is designed for an at least positive connection of the connecting element (1) to an inner shell surface (2MI) or outer shell surface. (2MA) of the brake disc pot (2), the positive connection comprising at least one tongue-and-groove joint having a tongue (S) and a groove (N).

2. Connecting element (1) according to claim 1, **characterised in that** the element (11) for securing the brake disc ring (3) in an axial direction (B) is intended to be in direct contact with the brake disc ring (3) in the connection.

3. Connecting element (1) according to either claim 1 or claim 2, **characterised in that** the connecting element (1) has the tongue (S) of the at least one tongue-and-groove joint.

4. Connecting element (1) according to claim 3, **characterised in that** the tongue (S) extends continuously over the entire open annular shape of the connecting element (1).

5. Connecting element (1) according to any of claims 1 to 4, **characterised in that** the material of the connecting element (1) comprises spring steel.

6. Brake disc (100) comprising a brake disc ring (3), a brake disc pot (2) and a connecting element (1) according to any of claims 1 to 5, **characterised in that** the brake disc pot (2) has a tubular portion (2R), the inner shell surface (2MI) or outer shell surface (2MA) of which is at least positively connected to the connecting element (1).

7. Brake disc (100) according to claim 6, **characterised in that** the brake disc pot (2) is chamfered in the region of the lateral surface (2MI, 2MA) connected to the connecting element (1) such that, when the brake disc (100) is assembled, the connecting element (1) slides in the axial direction (A) into or over the tubular portion (2R) of the brake disc pot (2) merely when force is applied and the at least positive connection can be produced.

## Revendications

1. Élément de liaison (1) approprié à une liaison d'une couronne de disque de frein (3) à un bol de disque de frein (2) pour former un disque de frein (100), l'élément de liaison (1) étant conçu de manière à présenter une forme annulaire ouverte, l'élément de liaison (1) décrivant, dans son état conforme aux prescriptions, plus de 180° de la forme annulaire, et l'élément de liaison (1) comportant au moins un élément (11) de fixation de la couronne de disque de frein (3) dans une direction axiale (B), **caractérisé en ce que** l'élément de liaison (1) est conçu pour une liaison au moins par complémentarité de forme de l'élément de liaison (1) à une surface d'enveloppe intérieure (2MI) ou extérieure (2MA) du bol de disque de frein (2), la liaison par complémentarité de forme comportant au moins un assemblage à rainure et languette comprenant une languette (S) et une rainure (N).

2. Élément de liaison (1) selon la revendication 1, **caractérisé en ce que** l'élément (11) de fixation de la couronne de disque de frein (3) dans une direction axiale (B) est destiné à être en contact direct avec la couronne de disque de frein (3) dans la liaison.

3. Élément de liaison (1) selon la revendication 1 ou 2, **caractérisé en ce que** l'élément de liaison (1) comprend la languette (S) dudit au moins un assemblage à rainure et languette.

4. Élément de liaison (1) selon la revendication 3, **caractérisé en ce que** la languette (S) s'étend de manière continue sur toute la forme annulaire ouverte de l'élément de liaison (1).

5. Élément de liaison (1) selon l'une des revendications 1 à 4, **caractérisé en ce que** la matière de l'élément de liaison (1) comporte de l'acier à ressorts,

6. Disque de frein (100) comportant une couronne de disque de frein (3), un bol de disque de frein (2) et un élément de liaison (1) selon l'une des revendications 1 à 5, **caractérisé en ce que** le bol de disque de frein (2) comprend une partie tubulaire (2R), laquelle est reliée à l'élément de liaison (1) au moins par complémentarité de forme au niveau de sa surface d'enveloppe intérieure (2MI) ou de sa surface d'enveloppe extérieure (2MA).

7. Disque de frein (100) selon la revendication 6, **caractérisé en ce que** le bol de disque de frein (2) est biseauté dans la région de la surface d'enveloppe (2MI, 2MA) en liaison avec l'élément de liaison (1), de telle sorte que, lors d'un montage du disque de frein (100), l'élément de liaison (1) puisse glisser, seulement par application de force dans la direction axiale (A), dans ou au-delà de la partie tubulaire (2R) du bol de disque de frein (2) et de telle sorte que la liaison au moins par complémentarité de forme puisse être réalisée.
